# EUROPEAN PATENT SPECIFICATION

(11) **EP 4 259 941 B1**
(45) Date of publication and mention of the grant of the patent: **29.01.2025**
(21) Application number: 21863043.2
(22) Date of filing: 08.12.2021
(51) Int. Cl.: F15B 11/036, F15B 11/12

(54) **CYLINDER AND OPERATING METHODS THEREOF**
ZYLINDER UND VERFAHREN ZU SEINEM BETRIEB
CYLINDRE ET SES PROCÉDÉS DE FONCTIONNEMENT

(30) Priority: 08.12.2020 NL 2027076
(43) Date of publication of application: 18.10.2023
(73) Proprietor: V.S.E. Vehicle Systems Engineering B.V., 3905 NV Veenendaal (NL)
(72) Inventor: VAN BOCKHOOVEN, Erwin, 3905 NV Veenendaal (NL); VAN DEN DRIESCHE, Dennis Vincent, 3905 NV Veenendaal (NL)
(74) Representative: IP Maison
(86) International application number: PCT/NL2021/050748
(87) International publication number: WO 2022/124896

(56) References cited:
- EP-A1- 0 997 647
- EP-A1- 2 957 777
- WO-A1-2020/075629

## Description

### FIELD OF THE INVENTION

The invention relates to a cylinder that can be reliably and reproducibly positioned in an intermediate position between two extreme positions.

### BACKGROUND OF THE INVENTION

Cylinders, e.g., hydraulic cylinders and pneumatic cylinders, are widely known mechanical actuators to provide a unidirectional force through a unidirectional stroke parallel to a longitudinal axis of the cylinder. Said force can be provided in a positive direction corresponding to an increase in length of the cylinder and/or in a negative direction corresponding to a decrease in length of the cylinder.

Cylinders typically comprise a cylinder housing with a first side and a second side opposite the first side, a rod moveably arranged inside the cylinder housing such that at least a portion of the rod extends from the cylinder housing at the second side of the cylinder housing, and a piston arranged inside the cylinder housing in sealing engagement with the cylinder housing and connected to the rod.

In a particular example, a hydraulic cylinder is used to cause the steering motion of an axle of a vehicle, wherein the rod of the cylinder is connected to a steering arm of the axle so that motion of the rod of the cylinder is transferred to a steering motion of the wheel and via a track rod to the other wheel.

It is also possible to use a cylinder in which the rod also extends from the cylinder housing at the first side of the cylinder housing and in which the rod takes over the function of the track rod of the axle allowing to directly steer both wheels. An advantage thereof is that the number of parts needed for the axle will be lower, the axle weight is reduced, and the packaging is more compact.

In steering, it can be advantageous to include centering and/or blocking functionality for the axle so that an axle of a vehicle can be put in a neutral straight forward steering position and/or can be blocked in a certain position.

An example of a so-called track rod cylinder can be found in CN104930016A. This document discloses a cylinder with a cylinder housing having a steering portion and a centering portion next to the steering portion. The steering portion comprises a piston arranged inside the cylinder housing in sealing engagement with the cylinder housing and connected to the rod, and two chambers arranged at both sides of the piston to provide a double-acting cylinder for steering purposes. The centering portion comprises two floating pistons moveably arranged on the rod in sealing engagement with the cylinder housing and the rod, and two chambers arranged on opposite sides of the floating pistons, so that pressurizing these two chambers will urge the two floating pistons towards each other, thereby aligning a sleeve on the rod with a sleeve on the inside of the cylinder housing to center the rod.

Another example, relating to a single-action cylinder, can be found in CN201784677U. This document discloses a fixed piston arranged in between two floating pistons which can be moved to trap the fixed piston in between the two floating pistons in a predefined position relative to the cylinder housing to center the rod. Further, EP0997647 discloses a hydraulic cylinder with two floating pistons that can be used to center the cylinder rod. A disadvantage of the prior art hydraulic cylinders with centering and/or blocking functionalities is that usually one has to sacrifice one of the advantages resulting in an increase of complexity and/or number of parts and/or the required space, especially when for a track rod cylinder. CN104930016A for instance requires an equally sized centering portion next to a steering portion including sleeves and floating pistons, while CN201784677U requires relatively large floating pistons. Further, in both cases, the floating pistons both need to be pressurized to provide the centering function.

### SUMMARY OF THE INVENTION

In view of the above it is an object of the invention to provide a cylinder with a centering or blocking function that requires a relatively small space and is relatively simple of construction and/or operation.

According to the invention, there is provided a cylinder comprising:
- a cylinder housing with a first side and a second side opposite the first side;
- a rod moveably arranged inside the cylinder housing such that at least a portion of the rod extends from the cylinder housing at the second side of the cylinder housing;
- a first piston arranged inside the cylinder housing in sealing engagement with the cylinder housing and fixed to the rod;
- a second piston arranged inside the cylinder housing in sealing engagement with the cylinder housing and fixed to the rod at a distance from the first piston;
   and
- a floating piston moveably arranged on the rod in between the first and second piston,
wherein the cylinder housing includes a floating piston section guiding the floating piston and configured to delimit movement of the floating piston.

An advantage of the cylinder according to the invention is that a minimum number of components are required to provide a centering or blocking function, namely one floating piston in between two fixed pistons. As a result, the space occupied by the cylinder can be relatively small and the operation thereof can be relatively simple.

According to the invention, the cylinder further comprises a pressure device or pressure system configured to allow a pressure to be applied between the floating piston and the first piston in order to move the floating piston into engagement with the second piston and into engagement with the cylinder housing at a second piston side of the floating piston section, or to allow a pressure to be applied between the floating piston and the second piston in order to move the floating piston into engagement with the first piston and into engagement with the cylinder housing at a first piston side of the floating piston section, to position the rod in an intermediate position between two extreme positions.

Pressure may further be applied between the first piston and the cylinder housing and/or pressure may further be applied between the second piston and the cylinder housing to control movement and/or position of the rod relative to the cylinder housing during normal operation.

Pressure (to be) applied between the first piston and the floating piston, and/or between the second piston and the floating piston, and/or between the floating piston and the cylinder housing may be used for positioning the rod in a predetermined intermediate position, e.g. a center position, and/or blocking of movement of the rod independent of pressure (to be) applied between the first piston and the cylinder housing and/or independent of pressure (to be) applied between the second piston and the cylinder housing.

It is to be noted explicitly here, that allowing to apply pressure means that a force may not always be applied but may be applied under specific circumstances. Examples thereof are:
1. preventing a fluid from entering or leaving a space or chamber in the cylinder while the fluid itself is not pressurized. A force/pressure may then only be applied by the fluid when there is force present urging to change a volume of the space or chamber; and
2. providing a spring in equilibrium, so that a force/pressure may only be applied by the spring when there is a displacement of the rod.

Another advantage of the invention is that only pressure needs to be applied in one of the chambers to provide a mechanical reproducible intermediate position of the rod in which the floating piston is in engagement with the cylinder housing at an end of the floating piston section and the first or second piston is in engagement with the floating piston.

Hence, the pressure device or pressure system comprises a centering mode in which the application of pressure in at least one chamber results in a non-zero resulting force on the floating piston urging the floating piston to a predetermined position. A non-zero resulting force may be generated by configuring the cylinder such that a cross-section of the floating piston is larger than a cross-section of the first piston and/or the second piston, e.g. by providing a floating piston with a diameter larger than a diameter of the first piston and/or larger than a diameter of the second piston, so that introducing a pressure between the floating piston and the first or second piston results in a larger force on the floating piston then on the first or second piston, so that even when the other one of the first and second piston is in engagement with the floating piston, the resulting force on the floating piston still urges the floating piston towards an end of the floating piston section.

In an embodiment, the pressure device or pressure system comprises a blocking mode in which movement of the rod is substantially blocked. Blocking may be carried out using a chamber between the first piston and the floating piston and/or a chamber between the second piston and the floating piston.

In an embodiment, blocking involves preventing movement of the floating piston relative to the cylinder housing and preventing movement of the first or second piston relative to the floating piston.

In an embodiment, the cylinder includes one or more springs acting on the floating piston and the first piston and/or second piston to provide pressure. A first spring may for instance be arranged between the floating piston and the first piston or between the floating piston and the second piston, and a second spring may for instance be arranged between the floating piston and the cylinder housing. The first and/or second springs may be compression spring. Alternatively, the first and/or second springs may be tension springs.

When only one or more mechanical springs are used to apply the pressure, the floating piston does not necessarily need to be in sealing engagement with the cylinder housing and the rod. However, when a gas or liquid is alternatively or additionally used to apply pressure between the floating piston and the first piston or between the floating piston and the second piston, the floating piston is preferably in sealing engagement with the cylinder housing and the rod.

In an embodiment, at least a further portion of the rod extends from the cylinder housing at the first side of the cylinder housing. This allows to use the cylinder as a track rod cylinder.

In an embodiment, the cylinder housing includes a port for fluid communication with a chamber between the floating piston and the first piston.

In an embodiment, the cylinder housing includes a port for fluid communication with a chamber between the floating piston and the second piston.

The invention also relates to a method for operating a cylinder according to the invention, wherein the method comprises the following step:
a. applying pressure between the floating piston and the first piston thereby moving the floating piston into engagement with the second piston and into engagement with the cylinder housing at a second piston side of the floating piston section or applying pressure between the floating piston and the second piston thereby moving the floating piston into engagement with the first piston and into engagement with the cylinder housing at a first piston side of the floating piston section.

In an embodiment, applying pressure comprises pressurizing a chamber between the floating piston and the first piston or a chamber between the floating piston and the second piston with hydraulic fluid.

In an embodiment, applying pressure comprises pressurizing a chamber between the floating piston and the first piston or a chamber between the floating piston and the second piston with gas.

In an embodiment, applying pressure is carried out by a spring arranged between the floating piston and the first piston or arranged between the floating piston and the second piston.

The invention further relates to a method for operating a cylinder according to the invention, wherein the method comprises the following steps:
a. filling a chamber between the floating piston and the first piston and/or filling a chamber between the floating piston and the second piston with a substantially incompressible fluid; and
b. preventing fluid from leaving said filled chamber(s).

In step b. the fluid may also be prevented from entering said filled chamber(s).

### BRIEF DESCRIPTION OF THE DRAWINGS

The invention will now be described in a non-limiting way by reference to the accompanying drawings in which like parts are indicated by like reference symbols, and in which:
- Fig. 1: schematically depicts a cross-sectional view of a cylinder according to an embodiment of the invention in an intermediate position;
- Fig. 2: schematically depicts a cross-sectional view of the cylinder of Fig. 1 in one of two extreme positions;
- Fig. 3: schematically depicts a cross-sectional view of the cylinder of Fig. 1 in another one of the two extreme positions;
- Fig. 4: schematically depicts a cross-sectional view of the cylinder of Fig. 1 in the intermediate position using a different configuration;
- Fig. 5: schematically depicts a cross-sectional view of a cylinder according to another embodiment of the invention in an intermediate position;
- Fig. 6: schematically depicts a cross-sectional view of a cylinder according to yet another embodiment of the invention in an intermediate position;
- Fig. 7: schematically depicts a cross-sectional view of a cylinder according to a further embodiment of the invention in a first position; and
- Fig. 8: schematically depicts a cross-sectional view of the cylinder of Fig. 7 in a second position.

### DETAILED DESCRIPTION OF THE INVENTION

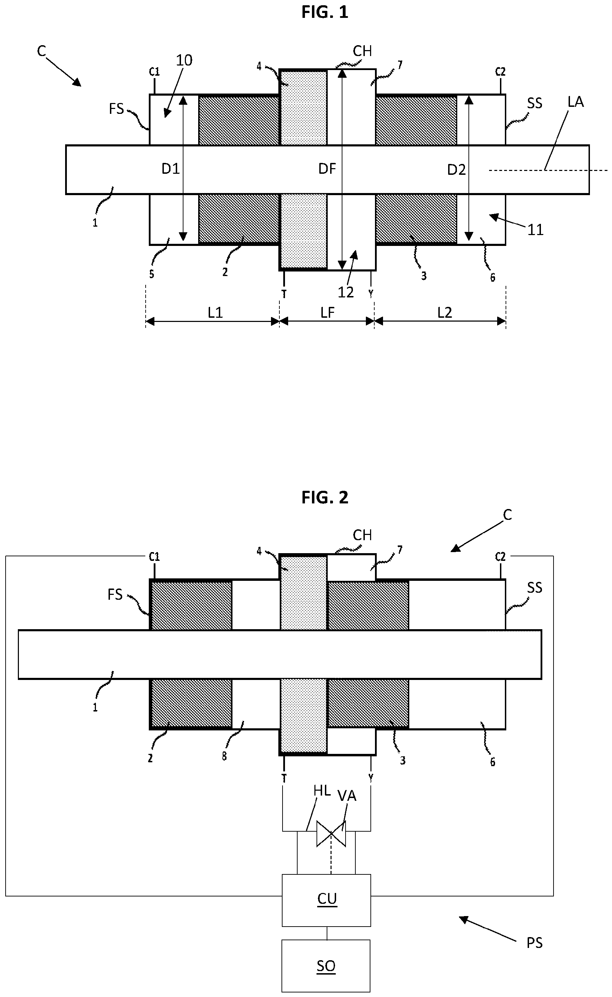

Figs. 1-4 schematically depict a cross-sectional view of a cylinder C according to an embodiment of the invention.

The cylinder C comprises a cylinder housing CH with a first side FS and a second side SS opposite the first side FS. The cylinder C further includes a rod 1 moveably arranged inside the cylinder housing CH such that at least a portion of the rod 1 extends from the cylinder housing CH at the second side SS of the cylinder housing CH. In this example, also a portion of the rod 1 extends from the cylinder housing CH at the first side FS of the cylinder housing CH, but this is not essential to the invention.

Arranged inside the cylinder housing CH in sealing engagement with the cylinder housing CH and connected to the rod are a first piston 2 and a second piston 3. The first piston 2 defines a chamber 5 extending from the first piston 2 to the first side FS of the cylinder housing CH. The chamber 5 is thus delimited by the cylinder housing CH and the first piston 2 only. The second piston 3 defines a chamber 6 extending from the second piston 3 to the second side SS of the cylinder housing CH. The chamber 6 is thus delimited by the cylinder housing CH and the second piston 3 only.

The first piston 2 and the second piston 3 are arranged at a distance from each other. In between the first piston 2 and the second piston 3, a floating piston 4 is moveably arranged on the rod in sealing engagement with the cylinder housing CH and the rod 1 allowing to move the floating piston 4 parallel to a longitudinal axis LA of the rod 1 between the first piston 2 and the second piston 3.

The first piston 2 and the floating piston 4 define a chamber 8 in between the first piston 2 and the floating piston 4. The chamber 8 is thus delimited by the cylinder housing CH, the first piston 2 and the floating piston 4. The second piston 3 and the floating piston 4 define a chamber 7 in between the second piston 3 and the floating piston 4. The chamber 7 is thus delimited by the cylinder housing CH, the second piston 3 and the floating piston 4.

The cylinder housing CH can be divided into a first piston section 10, a second piston section 11, and a floating piston section 12.

The first piston section 10 extends from the first side FS of the cylinder housing CH over a length L1 and is arranged to guide the first piston 2. The first piston section 10 has a thickness or diameter D1.

The second piston section 11 extends from the second side SS of the cylinder housing CH over a length L2 and is arranged to guide the second piston 3. The second piston section 11 has a thickness or diameter D2.

The floating piston section 12 extends between the first piston section 10 and the second piston section 11 over a length LF and is arranged to guide the floating piston 4. The floating piston section 12 has a thickness or diameter DF.

Preferably, the thickness or diameter D1 is equal to the thickness or diameter D2, and the thickness or diameter DF is larger than the thickness or diameter D1 and larger than the thickness or diameter D2.

Due to the larger thickness or diameter DF of the floating piston section 12 and the fact that the floating piston 4 is in sealing engagement with the cylinder housing CH, the floating piston 4 is trapped inside the floating piston section 12 and has a cross-section that is larger than a cross-section of the first piston 2 and the second piston 3.

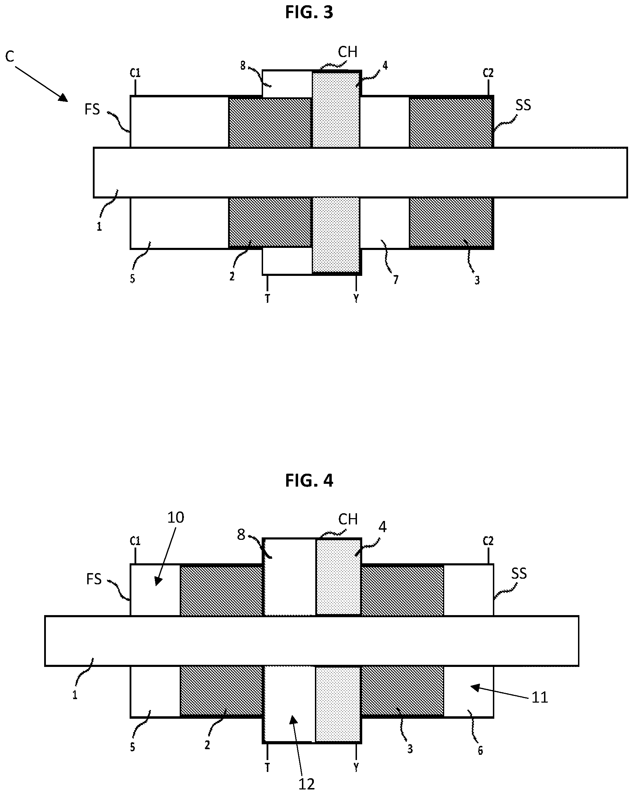

As will be clear below by reference to Figs. 2 and 3, the first piston 2 and the second piston 3 may partially extend into the floating piston section 12. Hence, the floating piston section 12 guiding the floating piston 4 is configured to delimit movement of the floating piston 4. The first piston section 10 only delimits movement of first piston 2 at the first side end of the first piston section 10, and the second piston section 11 only delimits movement of the second piston 3 at the second side end of the second piston section 11.

In this embodiment, the cylinder housing CH comprises a first port C1 for fluid communication with the chamber 5, a second port C2 for fluid communication with the chamber 6, a third port Y for fluid communication with the chamber 7, and a fourth port T for fluid communication with the chamber 8. These ports C1, C2, Y and T may be connected to a pressure system. An example of such a pressure system PS is depicted in Fig. 2 and will be described below in more detail. However, other embodiments requiring another pressure system or pressure device will also be described in relation to Figs. 1-4.

Fig. 1 depicts a situation in which the chamber 7 is or has been pressurized using the third port Y. At the same time the chambers 5, 6 and 8 are not pressurized or the pressure present in one or more of these chambers is too low compared to the pressure in chamber 7. As a result, the floating piston 4 is urged towards the first side FS so that the floating piston 4 engages with the cylinder housing CH at the transition between the first piston section 10 and the floating piston section 12. Further, due to the pressure in chamber 7 the second piston 3 is urged towards the second side SS so that the first piston 2 engages with the floating piston 4. Due to the larger cross-section of the floating piston compared to the cross-section of the second piston 3, the force applied to the floating piston 4 by the fluid in chamber 7 is larger than the force applied to the second piston 3 by the fluid in chamber 7, so that the pressure in chamber 7, which also exerts a force on the floating piston 4 via the second piston 3, the rod 1 and the first piston 2 when the first piston 2 is in engagement with the floating piston 4, is not able to move the floating piston 4 out of engagement with the cylinder housing CH at the transition between the first piston section 10 and the floating piston section 12. Hence, the position of the rod 1 is set relative to the floating piston 4 by engagement between the first piston 2 and the floating piston 4, and the position of the floating piston 4 is set relative to the cylinder housing CH, resulting in the position of the rod 1 being set relative to the cylinder housing CH. The position of the rod 1 in the cylinder housing CH as shown in Fig. 1 is referred to as an intermediate position. This intermediate position may be a center position but can be any desired intermediate position of the rod depending on the application.

Pressurizing the chamber 7 may be carried out using a gas (pneumatically) or a liquid (hydraulically).

In case of a gas, which is in general compressible, the gas in chamber 7 will act as a spring urging the floating piston 4 and the second piston 3 to the intermediate position of Fig. 1 while simultaneously allowing movement of the rod 1 to a certain degree depending on the pressure inside the chamber 7 and other forces acting on the rod 1, even in case the gas is prevented from leaving chamber 7. Hence, pressurizing the chamber 7 using a gas may result in centering.

In case of a liquid, which is in general incompressible, blocking the liquid from leaving the chamber 7 will prevent any movement of the floating piston 4 at all thus locking the position of the rod 1 to the intermediate position in Fig. 1 even in case of other forces acting on the rod 1. Hence, pressurizing the chamber 7 using a liquid may result in both centering and blocking.

To move the rod 1 to another position, the cylinder may be used as a single-acting cylinder using only chamber 5 or chamber 6 to push the rod 1 in one direction, and a load, spring, other cylinders or the momentum of a flywheel, etc., to push the rod 1 back in opposite direction. However, as is preferred, the cylinder is used as a double-acting cylinder using both chambers 5 and 6.

Fig. 2 depicts the cylinder C of Fig. 1 and an example of a pressure system PS, which may be considered to be at least partially part of the cylinder C but may also be considered separate from the cylinder C. It is noted that the pressure system PS is just an exemplary embodiment and that other pressure systems PS may be used with a cylinder C according to the invention.

The pressure system PS includes a pressure source SO and a control and distribution unit CU. The pressure source SO may be any kind of source, including but not limited to an external pressure source of a machine or vehicle, a pump or compressor, and/or an accumulator.

The control and distribution unit CU is configured to allow fluid to flow from and to the various chambers 5-8 of the cylinder C as will be described below in more detail.

Fig. 2 depicts an end result after pressurizing chamber 6 without pressurizing chamber 5, i.e. a pressure in chamber 6 is higher than a pressure in chamber 5. Pressurizing chamber 6 will urge the second piston 3 to the first side FS of the cylinder housing CH. The rod 1 will reach the position as shown in Fig. 2 when the force applied to the second piston 3 by the pressure inside chamber 6 is sufficient to overcome any resistance or forces caused in or by any of the other chambers 5, 7 and 8. This can be done by keeping the pressure inside the chambers relatively low and/or allowing fluid, i.e. gas or liquid, to flow freely in and out of the chambers.

To return from the position in Fig. 2 to the intermediate position in Fig. 1, the chamber 7 can be pressurized as described above. The rod 1 will then automatically return to the intermediate position of Fig. 1. It is also possible to move the rod 1 to the intermediate position of Fig. 1 by pressurizing chamber 5 without pressurizing chamber 6 in a similar manner as was described above for moving from the position of Fig. 1 to the position of Fig. 2 and stop movement of the rod 1 when reaching the intermediate position of Fig. 1. However, when moving the rod 1 using the chambers 5 and 6, the accuracy and reproducibility of a position of the rod 1 is determined by the control performance of the control and distribution unit CU pressurizing the chambers 5 and 6, possibly affected by the performance of position sensors. Further, during power failure it is likely that a position of the rod 1 cannot be maintained or cannot be maintained at a desired position.

With the cylinder C according to the invention, the intermediate position is determined by the mechanical construction of the cylinder C and only requires sufficient pressure between the floating piston 4 and the second piston 3 as in Fig. 1 or between the floating piston 4 and the first piston 2 as described below in relation to Fig. 4, thereby providing a high-accuracy and highly reproducible intermediate position that can easily be maintained even in case of power failure, e.g. by (passively) blocking the port to said one chamber.

The pressure system PS of Fig. 2 includes a hydraulic line HL between port Y and port T with a valve VA arranged in the hydraulic line. When the valve VA is closed, each of the ports Y and T can be addressed individually by the control and distribution unit CU. When the valve VA is open, both ports Y and T can be addressed simultaneously by the control and distribution unit CU.

It is also possible to fill the chambers 7 and/or 8, disconnect the ports T and Y from the control and distribution unit CU, i.e. the control and distribution unit CU will not exchange fluid between the cylinder C and the control and distribution unit CU other than to replenish fluid that was lost due to leakage, and open valve VA during an operational mode and close valve VA during a blocking mode. In a symmetrical design of the cylinder C, the chambers 7 and 8 have a similar configuration and a constant combined volume. Movement of the rod 1 or the floating piston 4 inside the cylinder C will then move fluid between chambers 7 and 8 when the valve VA is open allowing to control movement of the rod 1 using the chambers 5 and/or 6. Closing the valve VA blocks fluid communication between chambers 7 and 8 and thus blocks movement of the first and second piston 2, 3 relative to the floating piston 4, but also blocks movement of the floating piston 4 relative to the cylinder housing CH due to the larger diameter of the floating piston section resulting in a blocked position of the rod 1 relative to the cylinder housing CH. In this case, pressurizing the fluid is not required during blocking mode when an incompressible fluid is used. In case of a compressible fluid, pressurizing the fluid will set a threshold for the blocking function. When the forces applied to the rod 1 are below the threshold set by the pressure of the fluid, the rod 1 is prevented from moving. When the forces applied to the rod 1 are above the threshold set by the pressure of the fluid, the rod 1 is able to move.

Fig. 3 depicts an end result after pressurizing chamber 5 without pressurizing chamber 6. Pressurizing chamber 5 will urge the first piston 2 to the second side SS of the cylinder housing CH. The rod will reach the position as shown in Fig. 3 when the force applied to the first piston 2 by the pressure inside chamber 5 is sufficient to overcome any resistance or forces caused in or by any of the other chambers 6, 7 and 8. This can be done by keeping the pressure inside the chambers relatively low and/or allowing fluid to flow freely in and out of the chambers.

To return from the position in Fig. 3 to the intermediate position in Fig. 1, the chamber 7 can be pressurized as described above. The rod 1 will then automatically return to the intermediate position of Fig. 1 due to the pressure between the floating piston 4 and the second piston 3 when the pressure in the other chambers is sufficiently low.

Fig. 4 depicts a situation in which the chamber 8 is or has been pressurized using the fourth port T. At the same time the chamber 5, 6 and 7 are not pressurized or the pressure on one or more of these chambers is too low compared to the pressure in chamber 8. As a result, the floating piston 4 is urged towards the second side SS so that the floating piston 4 engages with the cylinder housing CH at the transition between the second piston section 11 and the floating piston section 12. Further, due to the pressure in chamber 8 the first piston 2 is urged towards the first side FS so that the second piston 3 engages with the floating piston 4. Due to the larger cross-section of the floating piston 4 compared to the cross-section of the first piston 2, the force applied to the floating piston 4 by the fluid in chamber 8 is larger than the force applied to the first piston 2 by the fluid in chamber 8, so that the pressure in chamber 8, which also exerts a force on the floating piston 4 via the first piston 2, the rod 1 and the second piston 3 when the second piston 3 is in engagement with the floating piston 4, is not able to move the floating piston 4 out of engagement with the cylinder housing CH at the transition between the second piston section 11 and the floating piston section 12. Hence, the position of the rod 1 is set relative to the floating piston 4, and the position of the floating piston 4 is set relative to the cylinder housing CH, resulting in the position of the rod 1 being set relative to the cylinder housing CH. The position of the rod 1 in the cylinder housing CH as shown in Fig. 4 is referred to as an intermediate position. This intermediate position may be the same as the intermediate position of Fig. 1 but can also be a different intermediate position of the rod depending on the application.

Pressurizing the chamber 8 may be carried out using a gas (pneumatically) or a liquid (hydraulically).

When both the third and fourth port are present and thus both chambers 7 and 8 can be pressurized for setting the rod 1 to an intermediate position, preferably a center position, it is possible to use one of the chambers 7, 8 for pressurizing with a gas for centering with a spring-like behavior and to use the other one of the chambers 7,8 for pressurizing with a liquid for blocking the rod 1 in the intermediate position. This means that the chamber for pressurizing with gas can be used urge the rod 1 to the intermediate position, but deviations from the intermediate position are allowed, for instance due to an external disturbance force. It further means that the chamber for pressurizing with liquid can be used to urge the rod 1 to the intermediate position and keep it in the intermediate position despite external disturbance forces. Keeping the rod 1 in the center position using the liquid does not necessarily mean that the fluid has to remain pressurized after reaching the center position. After reaching the center position, the pressure may be released and the rod 1 may be kept in position by blocking fluid communication with the corresponding chamber, so that the incompressibility of the fluid will provide sufficient resistance to movement of the rod 1.

As explained above, both chambers 7 and 8 can be used to position the rod 1 in the intermediate position by pressurizing the respective chamber. This pressure can be permanently provided with a gas trapped in the respective chamber. It is for instance possible to fill chamber 7 with a gas at a predetermined pressure and then close the third port Y. Chamber 7 may even be prefilled during assembly with a gas at a predetermined pressure so that the third port Y can be omitted at all. Moving to the intermediate position of the rod 1 then requires a sufficient reduction in pressure in the chambers 5, 6 and 8 to allow the pressure in chamber 7 to move the rod 1 to the intermediate position.

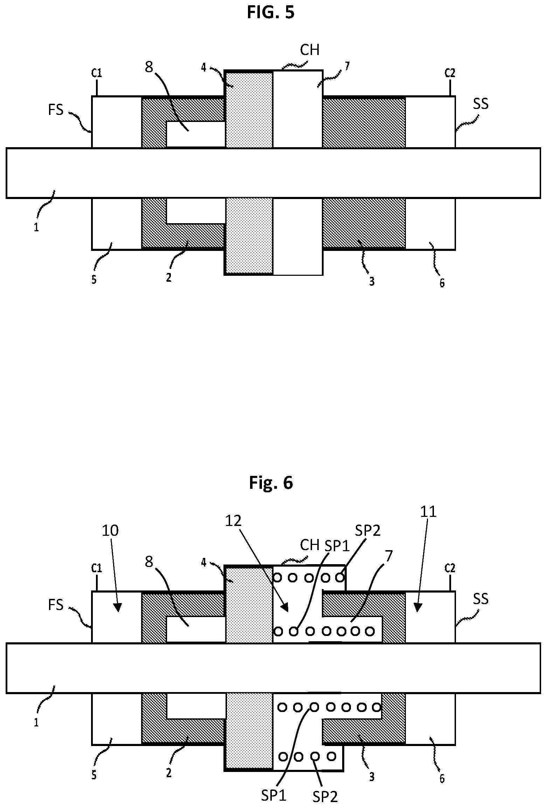

Fig. 5 depicts an example of a cylinder C similar to the embodiment of Figs. 1-4 but in which the third port Y and the fourth port T are omitted compared to the embodiment of Figs. 1-4. Further, the chambers 7 and 8 are both filled with gas. The pressure in chamber 7 is higher than the pressure in chamber 8. To make sure that the pressure in chamber 8 cannot become higher than the pressure in chamber 7 even in the case that the floating piston 4 engages with the first piston 2, the first piston is hollow ensuring that the volume has a predefined minimal value and thus the pressure in chamber 8 has a predefined maximum value that is below the pressure in chamber 7. Moving to the intermediate position of the rod 1 then requires a sufficient reduction in pressure in the chambers 5 and 6 to allow the pressure in chamber 7 to move the rod 1 to the intermediate position.

Fig. 6 depicts a cylinder C similar to the embodiment of Fig. 5 as it also does not have a third and fourth port Y, T for fluid communication with the chambers 7, 8. However, in the embodiment of Fig. 6, a pressure is applied between the floating piston 4 and the second piston 3 using a first compression spring SP1 arranged around the rod 1. This first spring SP1 will urge the floating piston 4 into engagement with the first piston 2. A second compression spring SP2 is provided between the floating piston 4 and the cylinder housing CH near the cylinder housing CH to urge the floating piston 4 into engagement with the cylinder housing CH at the first side FS side of the floating section 12. Hence, the position of the rod 1 is set relative to the floating piston 4 by the first spring SP1, and the position of the floating piston 4 is set relative to the cylinder housing CH by the second spring SP2, resulting in the position of the rod 1 being set relative to the cylinder housing CH.

It will be clear that in case of the use of springs in chambers 7 and 8, the floating piston 4 does not necessarily has to be in sealing engagement with the cylinder housing CH. In fact, it may be beneficial to allow fluid, e.g. liquid or gas, communication between the chambers 7 and 8, e.g. between the floating piston 4 and the cylinder housing CH or via holes in the floating piston 4 to much pressure build up inside the chambers 7 and 8 that may counteract movement of the rod 1 and/or may counteract one or more of the springs SP1, SP2.

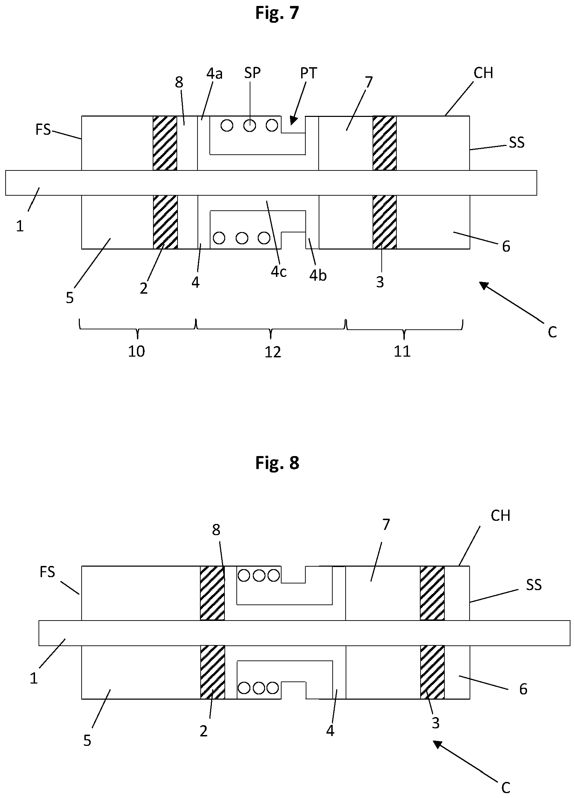

Fig. 7 and 8 schematically depict a cross-sectional view of a cylinder C according to a further embodiment of the invention. The cylinder C comprises a cylinder housing CH with a first side FS and a second side SS opposite the first side FS, a rod 1 moveably arranged inside the cylinder housing CH such that at least a portion of the rod 1 extends from the cylinder housing CH at the second side SS of the cylinder housing CH, a first piston 2 arranged inside the cylinder housing CH in sealing engagement with the cylinder housing CH and connected to the rod 1, a second piston 3 arranged inside the cylinder housing CH in sealing engagement with the cylinder housing CH and connected to the rod 1 at a distance from the first piston 2, and a floating piston 4 moveably arranged on the rod 1 in between the first piston 2 and the second piston 3.

The first piston 2 defines a chamber 5 extending from the first piston 2 to the first side FS of the cylinder housing CH. The second piston 3 defines a chamber 6 extending from the second piston 3 to the second side SS of the cylinder housing CH. The second piston 3 and the floating piston 4 define a chamber 7 in between the second piston 3 and the floating piston 4. The first piston 2 and the floating piston 4 define a chamber 8 in between the first piston 2 and the floating piston 4.

The cylinder housing CH comprises a floating piston section 12 configured to guide the floating piston 4. The section between the floating piston section 12 and the first side FS may be referred to as first piston section 10 mainly configured to guide the first piston 2. The section between the floating piston section 12 and the second side SS may be referred to as second piston section 11 mainly configured to guide the second piston 3. However, in some positions the first piston 2 and the second piston 3 may be guided by the floating piston section 12.

In this embodiment, the first piston 2, the third piston 3 and the floating piston 4 have an equally sized cross-section. To delimit movement of the floating piston 4 by the floating piston section 12 of the cylinder housing CH, the cylinder housing CH includes a protrusion (seen from the inside of the cylinder housing CH) formed by a diameter reduction of the cylinder housing CH and indicated by reference symbol PT. The protrusion PT is configured to engage with the floating piston 4 to delimit its movement.

The floating piston 4 includes two end portions 4a, 4b and an intermediate portion 4c with a smaller cross-section than the end portions 4a, 4b. The end portions 4a, 4b are in engagement, preferably sealing engagement with the cylinder housing CH and able to engage directly or indirectly with the protrusion PT that is arranged in between the two end portions 4a, 4b. The reduced cross-section of the intermediate portion 4c provides sufficient space for the protrusion PT but also provides space for a spring SP.

The spring SP is arranged in between the protrusion PT of the cylinder housing CH and the end portion 4a. In this embodiment, the spring SP is a compression spring urging the end portion 4b into direct engagement with the protrusion PT as depicted in Fig. 7. Pressurizing chamber 7 can be used to urge the floating piston 4 into engagement with the protrusion PT of the cylinder housing CH and to urge the first piston 2 into engagement with the floating piston 4. This position forms a reproducible intermediate position, e.g. a center position, that can be obtained by simply pressurizing chamber 7 and ensuring that pressures in the other chambers are sufficiently low.

To move the rod 1 to another position, the cylinder may be used as a single-acting cylinder using only chamber 5 or chamber 6 to push the rod 1 in one direction, and a load, spring, other cylinders or the momentum of a flywheel, etc., to push the rod 1 back in opposite direction. However, as is preferred, the cylinder is used as a double-acting cylinder using both chambers 5 and 6.

Fig. 8 depicts a situation in which chamber 5 is pressurized to move the rod 1 towards the second side SS of the cylinder C until the end portion 4a indirectly engages with the protrusion via spring SP. Indirect engagement here means that end portion 4a cannot be moved further towards the protrusion PT as the spring SP has fully been compressed. However, it is also envisaged that the protrusion PT or end portion 4a of the floating piston has an extension (e.g. a flange) extending between protrusion PT and end portion 4a of the floating piston to have direct engagement between each other to prevent damage to the spring SP.

Although the above examples depict a rod with a portion extending from a first side of the cylinder housing and a portion extending from a second side of the cylinder housing, the invention also relates to a cylinder with a rod extending only from one side, e.g. the second side of the cylinder housing.

## Claims

1. A cylinder (C) comprising:
- a cylinder housing (CH) with a first side (FS) and a second side (SS) opposite the first side;
- a rod (1) moveably arranged inside the cylinder housing such that at least a portion of the rod extends from the cylinder housing at the second side of the cylinder housing; and
- a first piston (2) arranged inside the cylinder housing in sealing engagement with the cylinder housing and fixed to the rod;
- a second piston (3) arranged inside the cylinder housing in sealing engagement with the cylinder housing and fixed to the rod at a distance from the first piston; and
- a floating piston (4) moveably arranged on the rod in between the first and second piston,
wherein the cylinder housing includes a floating piston section (12) guiding the floating piston and configured to delimit movement of the floating piston,
**characterized in that** the cylinder further comprises a pressure device or pressure system configured to allow a pressure to be applied between the floating piston and the first piston in order to move the floating piston into engagement with the second piston and into engagement with the cylinder housing at a second piston side of the floating piston section, or to allow a pressure to be applied between the floating piston and the second piston in order to move the floating piston into engagement with the first piston and into engagement with the cylinder housing at a first piston side of the floating piston section, to position the rod in an intermediate position between two extreme positions.

2. A cylinder according to claim 1, wherein the floating piston is in sealing engagement with the cylinder housing and the rod.

3. A cylinder according to any of claims 1-2, wherein the cylinder includes one or more springs (SP1, SP2) acting on the floating piston and the first piston and/or second piston to provide the pressure.

4. A cylinder according to any of claims 1-3, wherein a cross-section of the floating piston is larger than a cross-section of the first piston and/or larger than a cross-section of the second piston.

5. A cylinder according to any of claims 1-4, wherein at least a further portion of the rod extends from the cylinder housing at the first side of the cylinder housing.

6. A cylinder according to any of claims 1-5, wherein the cylinder housing includes a port (T) for fluid communication with a chamber (8) between the floating piston and the first piston.

7. A cylinder according to any of claims 1-6, wherein the cylinder housing includes a port (Y) for fluid communication with a chamber (7) between the floating piston and the second piston.

8. A method for operating a cylinder (C) according to any of claims 1 to 7, wherein the method comprises the following step:
• applying pressure between the floating piston (4) and the first piston (2) thereby moving the floating piston into engagement with the second piston (3) and into engagement with the cylinder housing (CH) at a second piston side of the floating piston section (12) or applying pressure between the floating piston and the second piston thereby moving the floating piston into engagement with the first piston and into engagement with the cylinder housing at a first piston side of the floating piston section.

9. A method according to claim 8, wherein applying pressure comprises pressurizing a chamber (8) between the floating piston and the first piston or a chamber (7) between the floating piston and the second piston with hydraulic fluid.

10. A method according to claim 8, wherein applying pressure comprises pressurizing a chamber (8) between the floating piston and the first piston or a chamber (7) between the floating piston and the second piston with gas.

11. A method according to claim 8, wherein applying pressure is carried out by a spring (SP1, SP2) arranged between the floating piston and the first piston or arranged between the floating piston and the second piston.

12. A method for operating a cylinder according to any of claims 1 to 7, wherein the method comprises the following steps:
• filling a chamber (8) between the floating piston (4) and the first piston (2) and/or filling a chamber (7) between the floating piston (4) and the second piston (3) with a substantially incompressible fluid; and
• preventing fluid from leaving said filled chamber(s).

## Patentansprüche

1. Ein Zylinder (C) umfassend:
- ein Zylindergehäuse (CH) mit einer ersten Seite (FS) und einer der ersten Seite gegenüberliegenden zweiten Seite (SS);
- eine Stang (1), die beweglich im Zylindergehäuse angeordnet ist, so dass zumindest ein Abschnitt der Stange aus dem Zylindergehäuse an der zweiten Seite des Zylindergehäuses herausragt; und
- einen ersten Kolben (2) der im Zylindergehäuse in dichtender Verbindung mit dem Zylindergehäuse angeordnet und mit der Stange verbunden ist;
- einen zweiten Kolben (3), der im Zylindergehäuse in dichtender Verbindung mit dem Zylindergehäuse angeordnet und in einem Abstand vom ersten Kolben mit der Stange verbunden ist; und
- einen schwimmenden Kolben (4), der beweglich auf der Stange zwischen dem ersten und dem zweiten Kolben angeordnet ist,
wobei das Zylindergehäuse einen schwimmenden Kolbenabschnitt (12) umfasst, der den schwimmenden Kolben führt und so konfiguriert ist, dass er die Bewegung des schwimmenden Kolbens begrenzt,
**dadurch gekennzeichnet, dass** der Zylinder eine Druckvorrichtung oder ein Drucksystem umfasst, um einen Druck zwischen dem schwimmenden Kolben und dem ersten Kolben auszuüben, um den schwimmenden Kolben in Eingriff mit dem zweiten Kolben und in Eingriff mit dem Zylindergehäuse an einer zweiten Kolbenseite des schwimmenden Kolbenabschnitts zu bewegen, oder um einen Druck zwischen dem schwimmenden Kolben und dem zweiten Kolben auszuüben, um den schwimmenden Kolben in Eingriff mit dem ersten Kolben und in Eingriff mit dem Zylindergehäuse an einer ersten Kolbenseite des schwimmenden Kolbenabschnitts zu bewegen, um die Stange in einer Zwischenposition zwischen zwei Extrempositionen zu positionieren.

2. Ein Zylinder nach Anspruch 1, wobei der schwimmende Kolben in dichtendem Eingriff mit dem Zylindergehäuse und der Stange steht.

3. Ein Zylinder gemäß einem der Ansprüche 1 bis 2, wobei der Zylinder eine oder mehrere Federn (SP1, SP2) umfasst, die auf den schwimmenden Kolben und den ersten Kolben und/oder den zweiten Kolben wirken, um den Druck bereitzustellen.

4. Ein Zylinder gemäß einem der Ansprüche 1 bis 3, wobei ein Querschnitt des schwimmenden Kolbens größer ist als ein Querschnitt des ersten Kolbens und/oder größer als ein Querschnitt des zweiten Kolbens.

5. Ein Zylinder gemäß einem der Ansprüche 1 bis 4, wobei zumindest ein weiterer Abschnitt der Stange aus dem Zylindergehäuse an der ersten Seite des Zylindergehäuses herausragt.

6. Ein Zylinder gemäß einem der Ansprüche 1 bis 5, wobei das Zylindergehäuse eine Öffnung (T) zur Flüssigkeitsverbindung mit einer Kammer (8) zwischen dem schwimmenden Kolben und dem ersten Kolben umfasst.

7. Ein Zylinder gemäß einem der Ansprüche 1 bis 6, wobei das Zylindergehäuse eine Öffnung (Y) zur Flüssigkeitsverbindung mit einer Kammer (7) zwischen dem schwimmenden Kolben und dem zweiten Kolben umfasst.

8. Verfahren zum Betreiben eines Zylinders (C) nach einem der Ansprüche 1 bis 7, wobei das Verfahren den folgenden Schritt umfasst:
• Ausüben von Druck zwischen dem schwimmenden Kolben (4) und dem ersten Kolben (2), wodurch der schwimmende Kolben in Eingriff mit dem zweiten Kolben (3) und in Eingriff mit dem Zylindergehäuse (CH) an einer zweiten Kolbenseite des schwimmenden Kolbenabschnitts (12) bewegt wird, oder Anwenden von Druck zwischen dem schwimmenden Kolben und dem zweiten Kolben, wodurch der schwimmende Kolben in Eingriff mit dem ersten Kolben und in Eingriff mit dem Zylindergehäuse an einer ersten Kolbenseite des schwimmenden Kolbenabschnitts bewegt wird.

9. Verfahren nach Anspruch 8, wobei das Ausüben von Druck das Unterdrucksetzen einer Kammer (8) zwischen dem schwimmenden Kolben und dem ersten Kolben oder einer Kammer (7) zwischen dem schwimmenden Kolben und dem zweiten Kolben mit Hydraulikflüssigkeit umfasst.

10. Verfahren nach Anspruch 8, wobei das Ausüben von Druck das Unterdrucksetzen einer Kammer (8) zwischen dem schwimmenden Kolben und dem ersten Kolben oder einer Kammer (7) zwischen dem schwimmenden Kolben und dem zweiten Kolben mit Gas umfasst.

11. Verfahren nach Anspruch 8, wobei das Ausüben von Druck durch eine zwischen dem Schwimmkolben und dem ersten Kolben oder zwischen dem Schwimmkolben und dem zweiten Kolben angeordnete Feder (SP1, SP2) erfolgt.

12. Verfahren zum Betreiben eines Zylinders nach einem der Ansprüche 1 bis 7, wobei das Verfahren die folgenden Schritte umfasst:
• Füllen einer Kammer (8) zwischen dem schwimmenden Kolben (4) und dem ersten Kolben (2) und/oder Füllen einer Kammer (7) zwischen dem schwimmenden Kolben (4) und dem zweiten Kolben (3) mit einer im Wesentlichen inkompressiblen Flüssigkeit; und
• Verhindern, dass Flüssigkeit die gefüllte(n) Kammer(n) verlässt.

## Revendications

1. Cylindre (C) comprenant:
- un boîtier de cylindre (CH) avec un premier côté (FS) et un deuxième côté (SS) opposé au premier côté;
- une tige (1) disposée de manière mobile à l'intérieur du boîtier de cylindre de telle sorte qu'au moins une partie de la tige s'étende à partir du boîtier de cylindre au niveau du deuxième côté du boîtier de cylindre; et
- un premier piston (2) disposé à l'intérieur du boîtier de cylindre en engagement d'étanchéité avec le boîtier de cylindre et relié à la tige;
- un deuxième piston (3) disposé à l'intérieur du boîtier de cylindre en engagement d'étanchéité avec le boîtier de cylindre et relié à la tige à une certaine distance du premier piston; et
- un piston flottant (4) disposé de manière mobile sur la tige entre le premier et le deuxième piston,
dans lequel le boîtier de cylindre comprenant une section de piston flottant (12) guidant le piston flottant et configurée pour délimiter le mouvement du piston flottant,
**caractérisé en ce que** le cylindre comprend un dispositif de pression ou un système de pression pour permettre l'application d'une pression entre le piston flottant et le premier piston afin de déplacer le piston flottant en engagement avec le deuxième piston et en engagement avec le boîtier de cylindre au niveau d'un côté du deuxième piston de la section de piston flottant ou pour permettre l'application d'une pression entre le piston flottant et le deuxième piston afin de déplacer le piston flottant en engagement avec le premier piston et en engagement avec le boîtier de cylindre au niveau d'un côté du premier piston de la section de piston flottant, pour positionner la tige dans une position intermédiaire entre deux positions extrêmes.

2. Cylindre selon la revendication 1, dans lequel le piston flottant est en engagement d'étanchéité avec le boîtier du cylindre et la tige.

3. Cylindre selon l'une quelconque des revendications 1 à 2, dans lequel le cylindre comprend un ou plusieurs ressorts (SP1, SP2) agissant sur le piston flottant et le premier piston et/ou le deuxième piston pour fournir la pression.

4. Cylindre selon l'une quelconque des revendications 1 à 3, dans lequel une section transversale du piston flottant est plus grande qu'une section transversale du premier piston et/ou plus grande qu'une section transversale du deuxième piston.

5. Cylindre selon l'une quelconque des revendications 1 à 4, dans lequel au moins une autre partie de la tige s'étend à partir du boîtier du cylindre sur le premier côté du boîtier du cylindre.

6. Cylindre selon l'une quelconque des revendications 1 à 5, dans lequel le boîtier du cylindre comprend un orifice (t) pour une communication fluidique avec une chambre (8) entre le piston flottant et le premier piston.

7. Cylindre selon l'une quelconque des revendications 1 à 6, dans lequel le boîtier du cylindre comprend un orifice (Y) pour une communication fluidique avec une chambre (7) entre le piston flottant et le deuxième piston.

8. Procédé de fonctionnement d'un cylindre (C) selon l'une quelconque des revendications 1 à 7, dans lequel le procédé comprend l'étape suivante:
• appliquer une pression entre le piston flottant (4) et le premier piston (2), déplaçant ainsi le piston flottant en engagement avec le deuxième piston (3) et en engagement avec le boîtier du cylindre (CH) au niveau d'un côté du deuxième piston de la section de piston flottant (12) ou appliquer une pression entre le piston flottant et le deuxième piston, déplaçant ainsi le piston flottant en engagement avec le premier piston et en engagement avec le boîtier du cylindre au niveau d'un côté du premier piston de la section de piston flottant.

9. Procédé selon la revendication 8, dans lequel appliquer une pression comprend la mise sous pression d'une chambre (8) entre le piston flottant et le premier piston ou d'une chambre (7) entre le piston flottant et le deuxième piston avec du fluide hydraulique.

10. Procédé selon la revendication 8, dans lequel appliquer une pression comprend la mise sous pression d'une chambre (8) entre le piston flottant et le premier piston ou d'une chambre (7) entre le piston flottant et le deuxième piston avec du gaz.

11. Procédé selon la revendication 8, dans lequel appliquer une pression est réalisée par un ressort (SP1, SP2) disposé entre le piston flottant et le premier piston ou disposé entre le piston flottant et le deuxième piston.

12. Procédé de fonctionnement d'un cylindre selon l'une quelconque des revendications 1 à 7, dans lequel le procédé comprend les étapes suivantes:
• remplir une chambre (8) entre le piston flottant (4) et le premier piston (2) et/ou remplir une chambre (7) entre le piston flottant (4) et le deuxième piston (3) avec un fluide sensiblement incompressible; et
• empêcher le fluide de quitter ladite (ou lesdites) chambre(s) remplies.
